# EUROPEAN PATENT APPLICATION

(11) **EP 4 691 329 A1**
(43) Date of publication of application: **11.02.2026**
(21) Application number: 24193791.1
(22) Date of filing: 09.08.2024
(51) Int. Cl.: A47J 43/07, A47J 43/046

(54) **MIXER BLADE SET WITH DETACHABLE COUNTERWEIGHT**

(71) Applicant: Taiyi Food Machinery Co. Ltd., East Dist, Taichung City (TW)
(72) Inventor: LI, Ying Hung, Taichung City (TW)
(74) Representative: Becker, Eberhard

(57) **Abstract**

A mixer blade set has a mounting shaft (10) and at least one mixing assembly (20). The mounting shaft (10) has a shaft body (11) extending axially. Each mixing assembly (20) has a mixer blade (21) and a counterweight (22) detachably connected to the shaft body (11) and abutting each other. The mixer blade (21) of each mixing assembly (20) has an assembling mount (211) detachably connected to the shaft body (11) and a blade body (212) radially extending from the assembling mount (211). The counterweight (22) of each mixing assembly (20) has an assembling mount (221) detachably connected to the shaft body (11) and a weight (222) disposed at a side of the assembling mount (221). The blade body (212) and the weight (222) of each mixing assembly (20) are located opposite each other and form a moment equilibrium.

## Description

### 1. Field of the Invention

The present invention relates to a food processor, and more particularly to a mixer blade set having a detachable counterweight and a mixer blade that can be solely replaced.

### 2. Description of Related Art

A vertical cutter mixer is mainly configured to chop food ingredients and stir the food ingredients for mixing. The vertical cutter mixer has a base, a motor assembled inside the base, a mixing barrel connected to and disposed above the base, a mixer blade set connected to the motor within the mixing barrel, and an openable lid mounted to a top of the mixing barrel. The mixer blade set can be driven by the motor to chop and stir the food ingredients within the mixing barrel.

A traditional mixer blade set has multiple mixer blades disposed along a driving shaft of the motor. Wherein, the multiple mixer blades are arranged at equiangular intervals to keep the mixer blades balanced while stirring. However, a spacing collar is disposed between each adjacent two mixer blades to separate the two mixer blades in the traditional mixer blade set. A gap between each adjacent two mixer blades makes the mixer blades unable to keep balanced while rotating.

A conventional mixer blade is provided for solving the abovementioned problem of the traditional mixer blade. The conventional mixer blade has a blade body and a counterweight formed integrally. However, the conventional mixer blade has to be replaced entirely when the blade body is worn out. The waste of production materials and costs are incurred accordingly.

The main objective of the present invention is to provide a mixer blade set that reduces the waste of production materials and costs.

The mixer blade set has a mounting shaft and at least one mixing assembly. The mounting shaft has a shaft body extending along an axial direction. Each mixing assembly has a mixer blade and a counterweight that are detachably connected to the shaft body and abut each other. The mixer blade of each mixing assembly has an assembling mount detachably connected to the shaft body and a blade body extending from the assembling mount of the mixer blade along a radial direction. The counterweight of each mixing assembly has an assembling mount detachably connected to the shaft body and a weight disposed at a side of the assembling mount of the counterweight. The blade body of the mixer blade and the weight of the counterweight of each mixing assembly are located opposite each other and form a moment equilibrium.

### In the drawings:

Fig. 1 is a perspective view showing that a mixer blade set in accordance with the present invention is assembled to a vertical cutter mixer;
Fig. 2 is a perspective view of the mixer blade set in Fig. 1;
Fig. 3 is an exploded perspective view of the mixer blade set in Fig. 2;
Fig. 4 is a perspective view of a mounting shaft of the mixer blade set in Fig. 2;
Fig. 5 is a perspective view of a mixer blade of the mixer blade set in Fig. 2;
Fig. 6 is a perspective view of a counterweight of the mixer blade set in Fig. 2;
Fig. 7 is a top view of the mixer blade set in Fig. 2;
Fig. 8 is cross-sectional side view of the mixer blade set in Fig. 2;
Fig. 9 is an enlarged cross-sectional side view of the mixer blade set in Fig. 8; and
Fig. 10 is a side view in partial section of a vertical cutter mixer with the mixer blade set in Fig. 2.

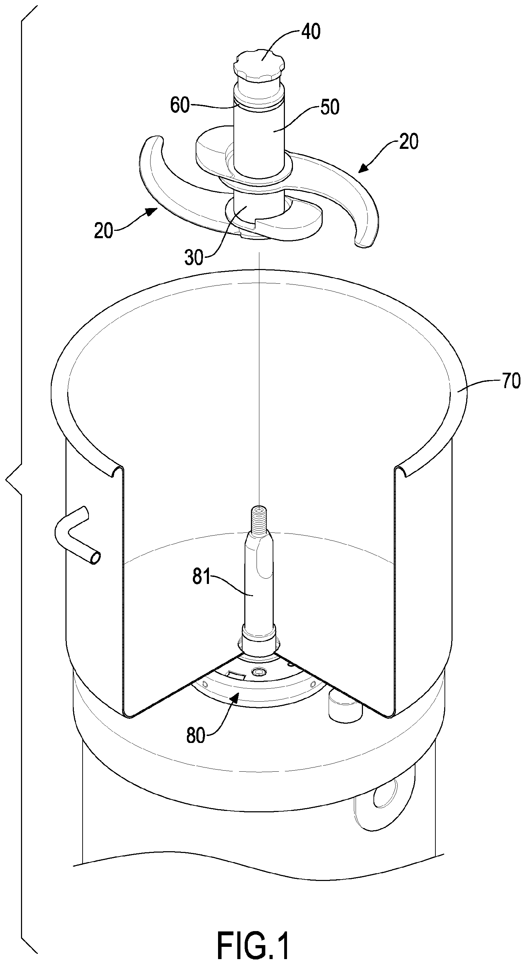

With reference to Figs. 1 to 3, a mixer blade set in accordance with the present invention is configured to be assembled to a mixer and has a mounting shaft 10, two mixing assemblies 20, a spacing unit 30, a fastening unit 40, a clamping unit 50, and a washer 60.

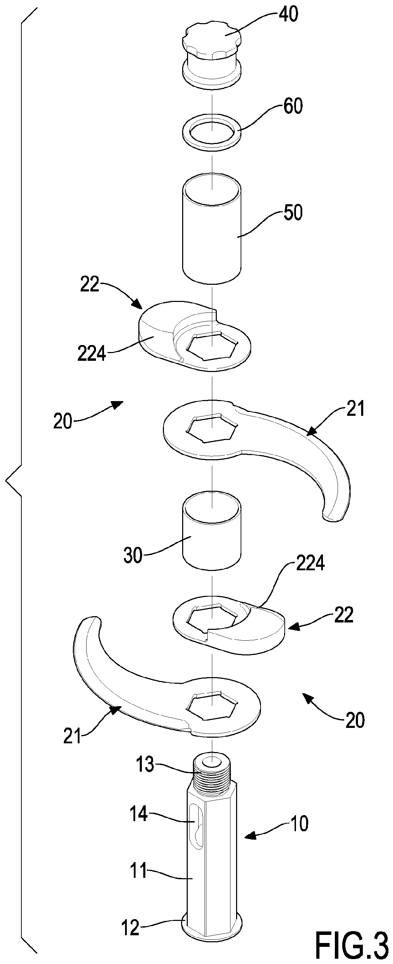

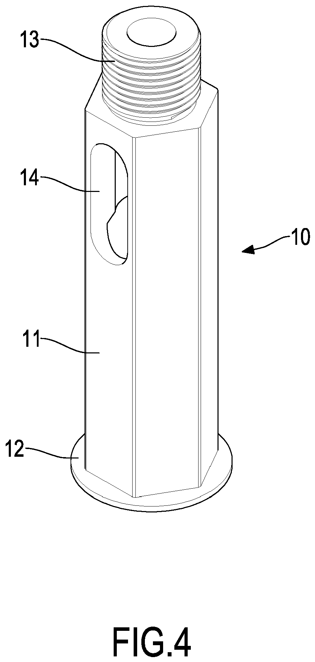

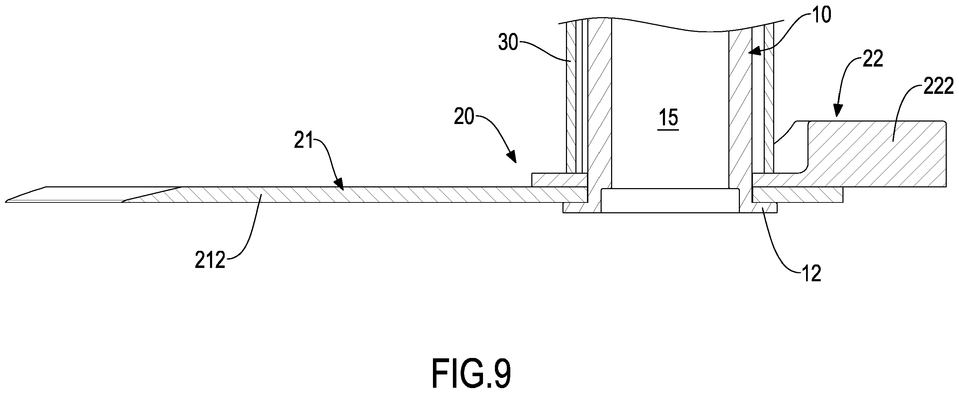

With reference to Figs. 3, 4, and 9, the mounting shaft 10 has a shaft body 11, a blocker 12, a screw 13, a through hole 14, and a mounting hole 15. The shaft body 11 extends along an axial direction and has two opposite ends in the axial direction. A circumferential surface of the shaft body 11 has a polygonal contour. In the embodiment of the present invention, the contour of the circumferential surface of the shaft body 11 is hexagonal. The blocker 12 and the screw 13 are respectively disposed at the two ends of the shaft body 11. The blocker 12 is formed at the circumferential surface of the shaft body 11. The screw 13 extends along the axial direction and has an external thread. The through hole 14 is defined through the shaft body 11 radially and is an elongated hole. The mounting hole 15 is formed inside the shaft body 11 and extends from the blocker 12 to the screw 13 along the axial direction.

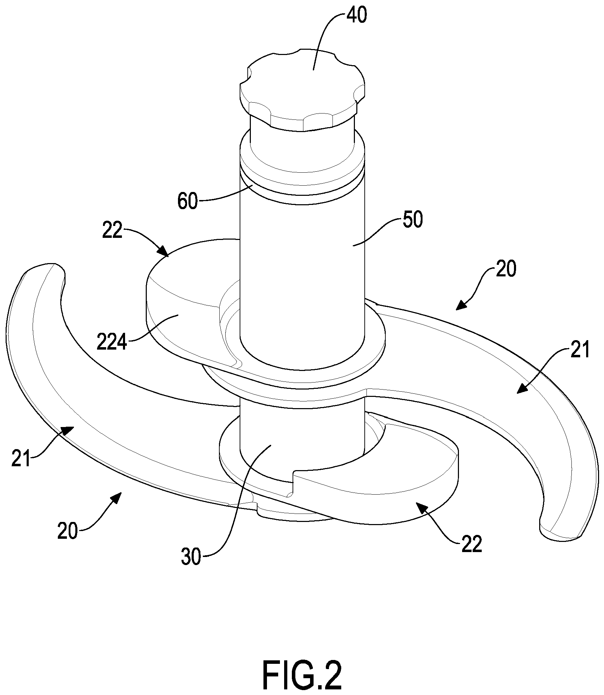

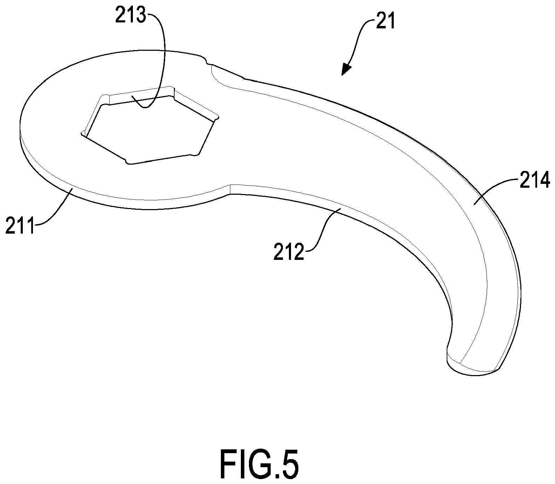

With reference to Figs. 2, 3, and 5, each of the two mixing assemblies 20 has a mixer blade 21 and a counterweight 22 that are detachably connected to the shaft body 11 and abut each other. The mixer blade 21 has an assembling mount 211, a blade body 212, an engaging hole 213, and a cutting edge 214. The assembling mount 211 is shaped as a plate and extends from the assembling mount 211 along a radial direction. The mixer blade 21 has a thickness larger than a thickness of the assembling mount 211. The engaging hole 213 is defined through the assembling mount 211 corresponding to the contour of the circumferential surface of the shaft body 11 and has a hexagonal contour. The cutting edge 214 is disposed at a side of the blade body 212. The mixer blade 21 of each mixing assembly 20 is mounted to the shaft body 11 via the engaging hole 213 thereof. In other embodiments, said mixing assembly 20 and the shaft body 11 may be connected or engaged with each other via a keyway or a pin.

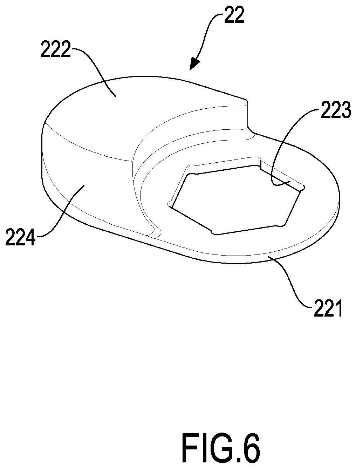

With reference to Figs. 2, 3, and 6, the counterweight 22 of each mixing assembly 20 has an assembling mount 221, a weight 222, and an engaging hole 223. The assembling mount 221 is shaped as a plate. The weight 222 is disposed at a side of the assembling mount 221 and has a thickness larger than a thickness of the assembling mount 221. The engaging hole 223 is defined through the assembling mount 221 corresponding to the contour of the circumferential surface of the shaft body 11 and has a hexagonal contour. The counterweight 22 of each mixing assembly 20 is mounted to the shaft body 11 via the engaging hole 223 thereof. The counterweight 22 of each mixing assembly 20 further has a guiding face 224 being oblique to reduce the resistance and the noise generated by the rotation of the counterweight 22 of each mixing assembly 20. Wherein the guiding face 224 of the counterweight 22 and the cutting edge 214 of the mixer blade 21 of each mixing assembly 20 face to opposite directions.

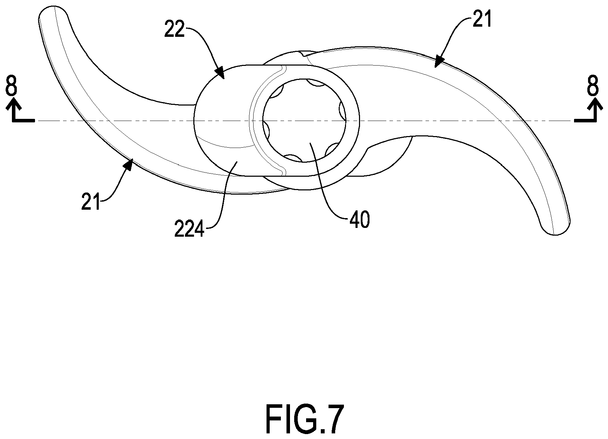

With reference to Figs. 2 to 7, the blade body 212 of the mixer blade 21 and the weight 222 of the counterweight 22 of each mixing assembly 20 are opposite in position and form a moment equilibrium. The two blade bodies 212 of the two mixer blades 21 of the two mixing assemblies 20 radially extend to opposite directions. The two cutting edges 214 of the two mixer blades 21 of the two mixing assemblies 20 face to opposite directions.

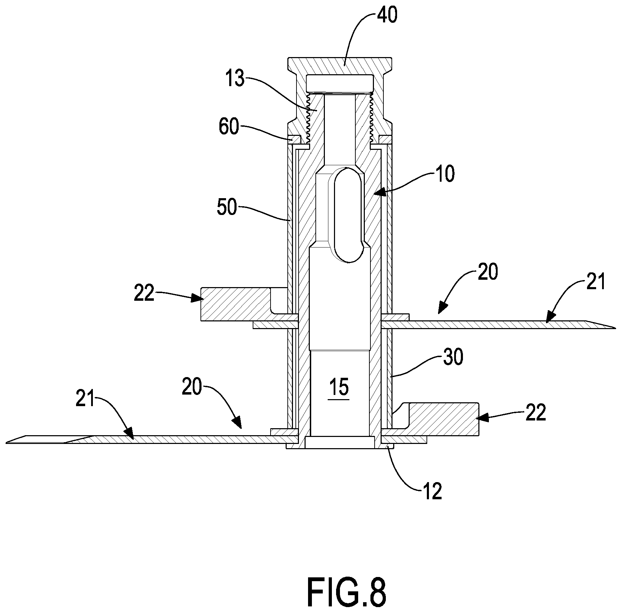

With reference to Figs. 2, 3, and 8, the spacing unit 30 is disposed between the two mixing assemblies 20. The spacing unit 30 is tubular and has two opposite ends. The spacing unit 30 is sleeved around the shaft body 11 and abuts the two mixing assemblies 20 via the two ends thereof. Specifically, one of the two ends of the spacing unit 30 abuts the assembling mount 221 of the counterweight 22 of one of the two mixing assemblies 20, and the other one of the two ends of the spacing unit 30 abuts the assembling mount 211 of the mixer blade 21 of the other one of the two mixing assemblies 20.

With reference to Figs. 2, 3, and 8, the fastening unit 40 is threaded to the screw 13. The clamping unit 50 is tubular, is sleeved around the shaft body 11, and abuts the assembling mount 221 of the counterweight 22 of one of the two mixing assemblies 20 via an end of the clamping unit 50. In the embodiment of the present invention, the clamping unit 50 has a length being larger than a length of the spacing unit 30. The washer 60 is circular, is sleeved around the shaft body 11, and is disposed between the fastening unit 40 and the other end of the clamping unit 50.

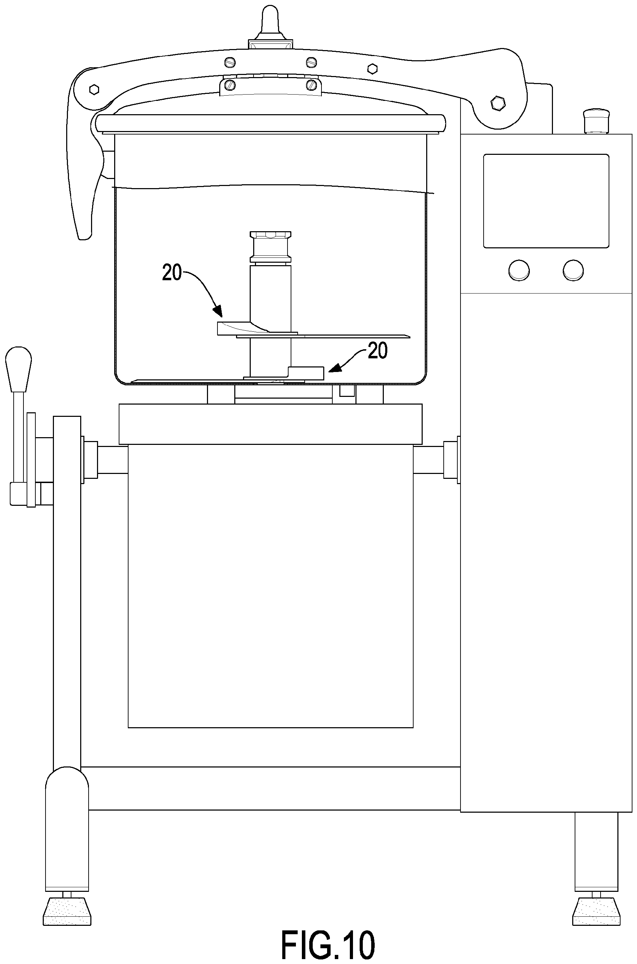

With reference to Figs. 1 and 10, the assembling shaft 10 is disposed within a mixing barrel 70 and is sleeved around a driving shaft 81 of a driving device 80 such as a motor via the mounting hole 15. When the driving device 80 operates, the assembling shaft 10 is driven to spin. The engaging hole 213 of each mixer blade 21 engages with the shaft body 11 of the assembling shaft 10, and the mixer blades 21 of the two mixing assemblies 20 are driven to rotate and to stir food ingredients within the mixing barrel 70.

In addition, the engaging hole 223 of each counterweight 22 engages with the shaft body 11 of the assembling shaft 10, the counterweights 22 of the two mixing assemblies 20 are driven to rotate and to keep the moment equilibrium of the mixer blades 21 of the two mixing assemblies 20 in the radial direction.

In the present invention, each mixing assembly 20 has the mixing blade 21 and the counterweight 22 being apart. The blade body 212 of the mixer blade 21 and the weight 222 of the counterweight 22 are radially opposite in location to form the moment equilibrium of the mixer blade 21 and the counterweight 22. Therefore, the mixer blade set of the present invention stirs efficiently. Poor stirring efficiency due to unbalance of the moment is avoided. Power consumption to rotate the mixer blade set of the present invention is lowered to provide an energy saving effect.

Furthermore, the mixer blade 21 and the counterweight 22 of each mixing assembly 20 are separate from each other. When the mixer blade 21 is worn out, the mixer blade 21 can be solely replaced. Compared to the conventional mixer blade with the blade body and the counterweight formed integrally, the mixer blade 21 of each mixing assembly 20 can be solely replaced to reduce the waste of production materials and costs caused by discarding the integrated counterweight, and also to reduce the use cost of the present invention.

## Claims

1. A mixer blade set, **characterized in that** the mixer blade set comprises:
a mounting shaft (10) having a shaft body (11) extending along an axial direction; and
at least one mixing assembly (20), each mixing assembly (20) having a mixer blade (21) and a counterweight (22) that are detachably connected to the shaft body (11) and abut each other;
the mixer blade (21) of each mixing assembly (20) having
an assembling mount (211) detachably connected to the shaft body (11); and
a blade body (212) extending from the assembling mount (211) of the mixer blade (21) along a radial direction;
the counterweight (22) of each mixing assembly (20) having
an assembling mount (221) detachably connected to the shaft body (11); and
a weight (222) disposed at a side of the assembling mount (221) of the counterweight (22);
wherein the blade body (212) of the mixer blade (21) and the weight (222) of the counterweight (22) of each mixing assembly (20) are located opposite each other and form a moment equilibrium.

2. The mixer blade set as claimed in claim 1, wherein
the shaft body (11) has a circumferential surface with a polygonal contour;
the mixer blade (21) of each mixing assembly (20) has an engaging hole (213) defined through the assembling mount (211) of the mixer blade (21), having a polygonal contour, and engaging with the shaft body (11); and
the counterweight (22) of each mixing assembly (20) has an engaging hole (223) defined through the assembling mount (221) of the counterweight (22), having a polygonal contour, and engaging with the shaft body (11).

3. The mixer blade set as claimed in claim 1 or 2, wherein the mixer blade (21) of each mixing assembly (20) has a cutting edge (214) disposed at a side of the mixer blade (21).

4. The mixer blade set as claimed in claim 1 or 3, wherein
the at least one mixing assembly (20) includes two or more mixing assemblies (20); and
two adjacent said mixing assemblies (20) arranged along the axial direction are separated by a spacing unit (30).

5. The mixer blade set as claimed in claim 4, wherein the spacing unit (30) between the two adjacent mixing assemblies (20) is tubular and abuts the two adjacent mixing assemblies (20).

6. The mixer blade set as claimed in claim 1, wherein the counterweight (22) of each mixing assembly (20) has a guiding face (224) being oblique and opposite to a cutting edge (214) of the mixer blade (21) of the mixing assembly (20).

7. The mixer blade set as claimed in claim 6, wherein
the mixer blade set has a fastening unit (40);
the mounting shaft (10) has a blocker (12) and a screw (13) located opposite each other in the axial direction;
the fastening unit (40) is threaded to the screw (13); and
the at least one mixing assembly (20) is clamped between the fastening unit (40) and the blocker (12).

8. The mixer blade set as claimed in any one of claims 1 to 3, wherein
the mixer blade set has a fastening unit (40);
the mounting shaft (10) has a blocker (12) and a screw (13) located opposite each other in the axial direction;
the fastening unit (40) is threaded to the screw (13); and
the at least one mixing assembly (20) is clamped between the fastening unit (40) and the blocker (12).

9. The mixer blade set as claimed in claim 4 or 5, wherein
the mixer blade set has a fastening unit (40);
the mounting shaft (10) has a blocker (12) and a screw (13) located opposite each other in the axial direction;
the fastening unit (40) is threaded to the screw (13); and
the mixing assemblies (20) are clamped between the fastening unit (40) and the blocker (12).
